# NEUE EUROPÄISCHE PATENTSCHRIFT

(11) **EP 2 011 556 B2**
(45) Veröffentlichungstag und Bekanntmachung des Hinweises auf die Entscheidung über den Einspruch: **23.11.2016**
(45) Hinweis auf die Patenterteilung: 13.04.2011
(21) Anmeldenummer: 07013312.9
(22) Anmeldetag: 06.07.2007
(51) Int. Cl.: B01D 39/16, A47L 9/14

(54) **Staubsaugerfilterbeutel**
Vacuum filter bag
Sac d'aspirateur

(43) Veröffentlichungstag der Anmeldung: 07.01.2009
(73) Patentinhaber: Eurofilters Holding N.V., 3900 Overpelt (BE)
(72) Erfinder: Schultink, Jan, 3900 Overpelt (BE); Sauer, Ralf, 3900 Overpelt (BE)
(74) Vertreter: Grünecker Patent- und Rechtsanwälte PartG mbB

(56) Entgegenhaltungen:
- EP-A- 1 795 248
- EP-B1- 0 246 811
- EP-B1- 1 048 335
- EP-B1- 1 050 331
- WO-A1-97/40913
- DE-A1- 3 508 941
- DE-C2- 4 410 110
- DE-U- 7 424 655
- DE-U1- 20 209 923
- US-A- 6 156 086

## Beschreibung

Die Erfindung betrifft einen Staubsaugerfilterbeutel mit einem Materialverbund, insbesondere einen Wegwerfstaubsaugerbeutel.

Bei Staubsaugefilterbeuteln geht die Entwicklung dahin, die Abscheideleistung und gleichzeitig die Standzeit zu erhöhen. Zu diesem Zweck weisen herkömmliche Staubsaugerfilterbeutel im Allgemeinen eine Beutelwand aus mehreren Filtermateriallagen auf. Bei den Filtermateriallagen handelt es sich beispielweise um Lagen aus Filterpapier oder Vliesstoff. Die verschiedenen Lagen erfüllen unterschiedliche Anforderungen. Neben den Lagen, die für die Abscheideleistung zuständig sind, können auch Lagen vorhanden sein, die die Standzeit (Staubspeicherkapazität) des Filterbeutels erhöhen, sowie Lagen, die eine Schutzfunktion erfüllen (beispielsweise Prallschutz). Darüber hinaus sind Lagen notwendig, die dem Filterbeutel Stabilität verleihen, ohne die Gebrauchseigenschaften zu verschlechtern.

Verschiedene mögliche Filterstrukturaufbauten sind beispielsweise in der EP 0 960 645 beschrieben, bei denen in Luftströmungsrichtung eine Grobfilterlage vor einer Feinfilterlage angeordnet ist, so dass größere Partikel von der Grobfilterlage aufgehalten und kleinere Partikel in der Feinfilterlage eingelagert werden können. Die bisher eingesetzten Schutz- und Verstärkungslagen sind zwar in der Lage, dem Beutel die gewünschte Berstfestigkeit zu verleihen oder auch empfindliche Filteriagen vor Abrasion durch die auftreffenden Partikel zu schützen, haben aber auch Nachteile. Die Luftdurchlässigkeit des Filterbeutels und damit die maximale Saugleistung des Staubsaugers wird reduziert. Um empfindliche Lagen des Beutelmaterials (z. B. eine Meltblownlage) zu schützen, müssen relativ dichte Schutzlagen eingesetzt werden, die selber dazu neigen, durch Hausstaub zu verstopfen. Einige der klassischerweise eingesetzten Verstärkungs- oder Schutzlagen wie Papier sind nicht schweißbar und eignen sich daher nicht für die Verwendung in modernen Kunststoffvliesbeuteln.

Aus der DE 202 09 923 ist ein Staubfilterbeutel bekannt, der eine gelochte Innenlage in Form einer perforierten Folie oder eines Netzes aufweist. Diese gelochte Innenlage dient dazu, nachfolgende Filteriagen vor scharfkantigen Partikeln zu schützen, die im Querschnitt größer als 100 µm sind. Zu diesem Zweck haben die Perforationen der Innenlage einen Durchmesser von 100 µm.

Ein Filtermaterial mit einer luftdurchlässigen Kunststofffolie ist aus der EP 1 795 248 bekannt, wobei die Kunststofffolie die Funktion einer Stützschicht erfüllt und eine geringe Luftdurchlässigkeit von beispielsweise 1200 l/(m² s) aufweist. Ein Staubbeutel mit einer Zwischenlage zwischen zwei Filteriagen (beispielsweise einem Filterpapier oder einem Nonwoven) ist aus der DE 201 10 838 bekannt, wobei die Zwischenlage dazu dient, eine Separierung der Filterlagen herzustellen, so dass die Filteriagen gegeneinander verschiebbar sind.

Angesichts des Stands der Technik besteht die Aufgabe der vorliegenden Erfindung darin, einen Staubsaugerfilterbeutel bereitzustellen, der eine hohe mechanische Stabilität aufweist, ohne dass die Entfaltung des Beutels im Betrieb behindert wird.

Diese Aufgabe wird gelöst durch einen Staubsaugerfilterbeutel gemäß Anspruch 1.

Erfindungsgemäß wird somit ein Staubsaugerfilterbeutel mit einem Materialverbund umfassend eine erste Lage aus einem Netz mit einer Luftdurchlässigkeit von wenigstens 10000 l/(m²s) und eine erste Faserlage aus Chemiefasern und/oder pflanzlichen Fasern, die mit einer Seite der ersten Lage verbunden ist, bereitgestellt.

Es hat sich überraschenderweise herausgestellt, dass ein Staubsaugefilterbeutel mit einer Beutelwand mit einem Materialverbund aus einer solchen ersten Lage mit einer derartigen Struktur und Luftdurchlässigkeit und einer solchen ersten Faserlage, in vorteilhafter Weise eine hohe mechanische Stabilität und gute Gebrauchseigenschaften zeigt.

Bei den Chemiefasern (Kunstfasern) kann es sich um Stapelfasern oder Endlosfasern, manchmal auch als Filamente bezeichnet, handeln. Bei den pflanzlichen Fasern (Naturfasem) kann es sich beispielsweise um Zellstofffasern, insbesondere Bambuszellstofffasem, handeln.

Bei dem Staubsaugerfilterbeutel kann es sich um einen Wegwerfbeutel handeln. Der Staubsaugerfilterbeutel kann insbesondere in Form eines Flachbeutels ausgebildet sein.

Das Netz kann beispielsweise ein extrudiertes Netz oder ein gewebtes Netz sein.

Die erste Faserlage kann insbesondere vollflächig, beispielsweise mittels Hotmelt, mit der ersten Lage verbunden sein. Damit sind die beiden Lagen nicht gegeneinander verschiebbar: Vollflächig bedeutet in diesem Zusammenhang nicht, dass alle Fasern miteinander vollständig verbunden, beispielsweise verschmolzen, sind, wodurch sich ein Film ergäbe. Es bedeutet vielmehr, dass die Lagen an einer Vielzahl von diskreten Stellen miteinander verbunden sind, wobei diese Stellen gleichmäßig über die gesamte Fläche der Lagen verteilt sind. Die Stellen können vorherbestimmt sein, beispielsweise im Falle eines Punkt- bzw. Gravurkalanders, oder nicht vorherbestimmt sein, beispielsweise im Falle von Hotmeltpulver und einem Bandkalander.

Die erste Lage und die erste Faserlage können insbesondere derart verbunden sein, dass die Struktur der ersten Lage unbeschädigt, insbesondere nicht deformiert, ist. Daher ist eine thermische Verbindung mittels eines glatten Kalanders oder Bandkalanders und Bikomponentenfasem, Schmelzbindefasem oder Hotmelt (Schmelzkleber) vorteilhaft.

Durch die Verbindung der beiden Lagen wird erreicht, dass die Höchstzugkraftdehnung gering wird. Dadurch wird sichergestellt, dass die auf den Beutel wirkenden Kräfte vom Materialverbund aufgenommen und weitere Filtrationslagen nicht zu sehr belastet werden.

Die erste Läge weist ein Flächengewicht von 5 bis 30 g/m², insbesondere 7 bis 20 g/m², und eine Dicke von 0,1 bis 1,5 mm, insbesondere 0,2 bis 0,6 mm, auf. Dies erlaubt eine ausreichende Flexibilität bei hoher Festigkeit. Die erste Lage kann insbesondere ein Flächengewicht von 5 bis 30 g/m², insbesondere von 7 bis 20 g/m², aufweisen.

Die erste Lage kann eine mittlere Lochquerschnittsfläche von 2 bis 900 mm², insbesondere von 5 bis 30 mm², und/oder eine Luftdurchlässigkeit von wenigstens 11000 l/(m² s), insbesondere von wenigstens 13000 m/(m² s), insbesondere von wenigstens 15000 m/(m² s), aufweisen.

Die erste Lage ist ein Netz mit einer Maschenweite von 2 mm bis 30 mm. Die Maschenweite kann unterschiedlichen Richtungen, beispielsweise in x- und y-Richtung bzw. in Maschinenrichtung und quer zur Maschinenrichtung, verschieden oder gleich sein. Bei dem Netz kann es sich um ein rechteckiges, insbesondere quadratisches, Netz handeln. Die Maschenweite kann insbesondere zwischen 2 x 2 mm und 30 x 30 mm liegen.

Die erste Lage kann eine Höchstzugkraft in Maschinenrichtung und/oder in Querrichtung von 30 bis 200 N, insbesondere von 40 bis 110 N aufweisen. Sie weist eine Höchstzugkraftdehnung in Maschinenrichtung und/oder in Querrichtung von 10 bis 70 %, insbesondere von 10 bis 30 %, auf.

Die erste Faserlage der beschriebenen Materialverbunde kann Fasern mit einer Feinheit von höchstens 5 dtex, insbesondere von höchstens 3 dtex, aufweisen. Die erste Faserlage kann insbesondere aus solchen Fasern bestehen.

Die oben genannten Parameter können insbesondere an die Größe oder den Einsatzzweck des Staubsaugerfilterbeutels angepasst sein. So kann für die erste Lage beispielsweise ein Flächengewicht von weniger als 15 g/m², eine Dicke von weniger als 0,5 mm und/oder eine Maschenweite von weniger als 5 mm gegebenenfalls besonders geeignet sein. Dies gilt beispielsweise für den Fall von Haushaltsstaubsaugem mit erhältnismäßig kleinen Beuteln (Volumen zwischen 2 und 5 I). Für gewerblich eingesetzte Staubsaugerbeutel können ein höheres Flächengewicht und/oder höhere Maschenweiten gegebenenfalls von Vorteil sein.

Die zuvor beschriebenen Materialverbunde umfassen eine zweite Faserlage aus Chemiefasern und/oder pflanzlichen Fasern, die mit der ersten Lage an der der ersten Faserlage abgewandten Seite verbunden ist. Die zweite Faserlage kann insbesondere mit der ersten Faserlage verbunden sein; dabei können insbesondere Fasern der ersten Faserlage mit Fasern der zweiten Faserlage verbunden sein. Insbesondere können Fasern der ersten Faserlage in den Löchern, Maschen oder Poren der ersten Lage mit Fasern der zweiten Faserlage verbunden sein. Die erste Faserlage, zweite Faserlage und/oder erste Lage können derart miteinander verbunden sein, dass sie nicht gegeneinander bewegbar, insbesondere verschiebbar sind.

Die zweite Faserlage kann ebenfalls die Eigenschaften und Parameter aufweisen, wie sie für die erste Faserige beschrieben sind. Die zweite Faserlage kann beispielsweise Fasern mit einer Feinheit von höchstens 5 dtex, insbesondere von höchstens 3 dtex, umfassen. Die Eigenschäften und Parameter der zweiten Faserlage können jedoch unabhängig von denen der ersten Faserlage gewählt werden. Die beiden Faserlagen können allerdings auch gleich ausgebildet sein.

Die erste und/oder die zweite Faserlage in den zuvor beschriebenen Materialverbunde können thermisch, insbesondere mittels Kalandrierens, und/oder mittels eines Klebemittels mit der ersten Lage und/oder der jeweils anderen Faserlage verbunden sein. Das Kalandrieren kann flächig (beispielsweise mittels eines Kalanders mit glatten Rollen oder mittels eines Bandkalanders) erfolgen. Bei dem Klebemittel kann es sich beispielsweise um Hotmelt, insbesondere Hotmeitpulver, handeln. Auch andere Verbindungsverfahren, insbesondere thermischer Art, sind möglich.

Die erste und/oder die zweite Faserlage sind, insbesondere vor einem Verbinden mit der ersten Lage, in Form einer Vliesstofflage ausgebildet.

Der Begriff Vliesstoff ("Nonwoven") wird gemäß der Definition nach ISO Standard ISO 9092: 1988 bzw. CEN Standard EN 29092 verwendet. Ein Vliesstoff kann insbesondere trockenoder nassgelegt oder ein Extrusionsvliesstoff, insbesondere ein Meltblown (schmelzgesponnener Mikrofaservliesstoff) oder Spunbond (Filamentspinnvliesstoff), sein. Die Abgrenzung zwischen nassgelegten Vliesstoffen beziehungsweise Nonwoven und herkömmlichem nassgelegtem Papier erfolgt gemäß der oben genannten Definition, wie sie auch von der International Association Serving the Nonwovens and Related Industries EDANA (www.edana.org) verwendet wird. Wenn also hier von Papier oder Filterpapier die Rede ist, ist damit (herkömmliches) nassgelegtes Papier gemeint, das in der oben genannten Definition von Vliesstoff ausgenommen ist. Unter einem Vlies ("Web") wird einen Lage von noch losen, d. h. unverbundenen, Fasern verstanden. Durch Verfestigen der losen Fasern kann dann ein Vliesstoff erhalten werden.

Somit können beispielsweise lose Fasern (z. B. Stapelfasern) auf einem Netz oder einer gelochten Folie abgelegt werden und dann damit, beispielsweise mittels Kalandrierens, verbunden werden. Die thermische Verbindung erfolgt beispielsweise entweder dadurch, dass das Netz Bikomponentenmaterial umfasst oder die Stapelfasern Bikompönentenfasem umfassen; die jeweils andere Lage kann dann Mono- oder Bikomponentenmaterial umfassen. Alternativ oder zusätzlich kann z. B. Hotmelt zur Verbindung aufgesprüht oder Hotmeltpulver auf- oder eingestreut wird. Eine separate Verfestigung der Vlieslage ist dabei nicht erforderlich. Die Faserlage muss somit keine eigenständige und stabile Filterlage bilden; erst in Kombination oder im Verbund mit der ersten Lage (Netz oder Folie) wird die erforderliche Stabilität erhalten.

Es können insbesondere die erste und/oder die zweite Faserlage in Form einer, insbesondere kardierten, Vlieslage oder Vliesstofflage aus Stapelfasern ausgebildet sein. Fasern der ersten und/oder zweiten Faserlage können in die Löcher, Maschen oder Poren der ersten Lage ragen.

Die erste und die zweite Faserlage sind jeweils eine trockengelegte Vliesstofflage oder eine Extrusionsvliesstofflage.

Als Materialien für Fasern der Faserlagen und/oder für die erste Lage kommen grundsätzlich verschiedenste Kunststoffe in Frage; auch natürliche Fasern, beispielsweise Zellstofffasem, können verwendet werden. Mögliche Materialien sind beispielsweise Polypropylen oder Polyester. Weiterhin können die erste Lage und/oder Fasern der ersten und/oder zweiten Faserlage eine Bikomponentenstruktur aufweisen. Die Verwendung von Bikomponentenfasern in der ersten Faserlage oder beispielsweise von einem Bikomponentennetz, d.h. einem Netz, dessen Fasern einen Bikomponentenaufbau aufweisen, ermöglicht insbesondere eine einfache thermische Verbindung der ersten Lage und der ersten Faserlage. Alternativ oder zusätzlich kann eine Faserige Schmelzbindefasem ("fusing fibers") umfassen.

Die erste Faserlage und/oder die zweite Faserlage können eine Flächengewicht von 5 bis 60 g/m², insbesondere von 5 bis 30g/m² aufweisen. Aufgrund des Netzes können somit Faserlagen mit geringem Flächengewicht verwendet werden, die durch das Netz mit hoher Luftdurchlässigkeit und geringer Verstopfungsneigung ausreichend stabilisiert werden. Bei Vorhandensein einer ersten und einer zweiten Faserlage können die Flächengewichte der ersten und zweiten Faserlage jeweils unabhängig voneinander zwischen 5 und 30 g/m² liegen.

Die zuvor beschriebenen Materialverbunde können eine dritte Faserlage aus Chemiefasern und/oder pflanzlichen Fasern, insbesondere in Form einer Vliesstofflage umfassen, die an der ersten Faserlage auf der der ersten Lage abgewandten Seite angeordnet ist. Durch eine geeignete Wahl der Filterparameter der verschiedenen Lagen lassen sich somit die gewünschten Filtereigenschaften einstellen.

Die zuvor beschriebenen Materialverbunde können eine vierte Faserlage aus Chemiefasern und/oder pflanzlichen Fasern, insbesondere in Form einer Vliesstofflage umfassen, die an der dritten Faserlage auf der der ersten Faserige abgewandten Seite angeordnet ist

Die erste, zweite, dritte und/oder vierte Faserige können jeweils eine trockengelegte oder nassgelegte Vliesstofflage oder eine Extrusionsvliesstofflage sein, wie sie beispielsweise zuvor beschrieben wurden. Die erste, zweite, dritte und/oder vierte Faserlage können jedoch unterschiedlich ausgebildet sein.

Der Verbund aus erster Lage und erster Faserlage oder aus erster Lage, erster Faserlage und zweiter Faserlage kann eine Luftdurchlässigkeit von 2000 bis 12000 l/(m²s), insbesondere 4000 bis 10000 l/(m² s), aufweisen.

Das Materialverbund kann an der am weitesten stromabwärts liegenden Stelle der Beutelwand des Staubsaugefilterbeutels angeordnet sein. Die erste Lage oder die erste Faserlage können insbesondere die äußerste Lage der Beutelwand des Staubsaugerfilterbeutels bilden. In diesem Fall ist dann die erste Lage oder die erste Faserlage die bezüglich des Luftstroms am weitesten stromabwärts angeordnete Lage des Staubsaugerfilterbeutels. Insbesondere wenn die beschriebenen Materialverbunde in Form dieses Verbundes an äußerster Stelle liegen, weist der Filterbeutel eine hohe Stabilität bei guten Gebrauchseigenschaften auf. Der Materialverbund kann sich insbesondere über die gesamte Fläche der Beutelwand erstrecken.

Die Erfindung stellt weiterhin ein Verfahren zum Herstellen eines Materialverbunds für einen Staubsaugerfilterbeutel gemäß Anspruch 12 bereit.

Mit einem derartigen Verfahren kann insbesondere einer der zuvor beschriebenen Materialverbunde und damit auch einer der zuvor beschriebenen Staubsaugefilterbeutel hergestellt werden.

Das Verbinden kann insbesondere vollflächig erfolgen. Der Schritt des Verbindens kann thermisch erfolgen. Es kann grundsätzlich punktförmig oder flächig erfolgen. Insbesondere kann es mittels einer glatten Kalanderwalze oder mittels eines Bandkalanders erfolgen. Der Schritt des Verbindens kann somit eine Führen durch glatte Kalanderwalzen oder einen Bandkalander umfassen.

Die Schritte des Bereitstellens können durch ein Ablegen der ersten Lage auf der ersten Faserlage oder durch ein Ablegen der ersten Faserlage auf der ersten Lage erfolgen.

Die erste Lage und/oder die erste Faserlage können die oben im Zusammenhang mit dem Materialverbund beschriebenen Eigenschaften und Parameter aufweisen. Beispielweise kann das Netz ein extrudiertes Netz oder ein gewebtes Netz sein. Die erste Faserlage kann insbesondere eine Vliesstofflage sein.

Bei dem genannten Verfahren wird die erste Lage mit einem Flächengewicht von 5 bis 30 g/m², insbesondere 7 bis 20 m², und einer Dicke von 0,1 bis 1,5 mm, insbesondere 0,2 bis 0,6 mm, bereitgestellt.

Die erste Lage kann mit einer mittleren Lochquerschnittsfläche von 2 bis 900 mm². insbesondere 5 bis 50 mm² und/oder einer Luftdurchlässigkeit von wenigstens 11000 l/(m²s), insbesondere von wenigstens 13000 l/(m²s), insbesondere von wenigstens 15000 l/(m²s), bereitgestellt werden. Die erste Faserlage kann Fasern mit einer Feinheit von höchstens 5 dtex, insbesondere von höchstens 3 dtex, aufweisen. Die erste Lage kann ein Netz mit einer Maschenweite von 2 mm bis 30 mm sein.

Die zuvor beschriebenen Verfahren umfassen weiterhin ein Bereitstellen einer zweiten Faserlage aus Chemiefasern und/oder pflanzlichen Fasern. Insbesondere wird die zweite Faserlage auf der der ersten Faserlage abgewandten Seite der ersten Lage bereitgestellt. Der Schritt des Verbindens kann ein Verbinden der zweiten Faserlage mit der ersten Lage, insbesondere an der der ersten Faserlage abgewandten Seite, umfassen. Insbesondere können beide Faserlagen gleichzeitig mit der ersten Lage und/oder miteinander verbunden werden. Dies bedeutet, dass das Bereitstellen der beiden Faserlagen und der ersten Lage vor dem Schritt des Verbindens erfolgen kann. Der Schritt des Verbindens kann derart erfolgen, dass Fasern der ersten und zweiten Faserlage in den Maschen bzw. Poren der ersten Lage miteinander verbunden werden. Das Verbinden kann derart erfolgen, dass die erste Lage durch Fasern der ersten und/oder zweiten Faserlage vollständig umschlossen wird.

Bei den genannten Verfahren kann der Schritt des Verbindens thermisch, insbesondere mittels Kalandrierens, und/oder mittels eines Klebemittels erfolgen. Die thermische Verbindung erfolgt beispielsweise entweder dadurch, dass das Netz Bikomponentenmaterial umfasst oder die Stapelfasern Bikornponentenfasern und/oder Schmetzbindefasern umfassen, und/oder indem z. B. Hotmelt zur Verbindung aufgesprüht oder Hotmeltpulver auf- oder eingestreut wird. Auch andere Verbindungsverfahren sind möglich.

Die zweite Faserlage kann die oben im Zusammenhang mit dem Materialverbund beschriebenen Eigenschaften und Parameter aufweisen. Die erste und/oder zweite Faserlage können jeweils eine trockengelegte oder nassgelegte Vliesstofflage oder eine Extrusionsvliesstofflage sein. Bei der ersten und/oder zweiten Faserlage kann es sich insbesondere um eine, insbesondere kardierte, Stapelfaserlage handeln.

Für die Faserlagen und die erste Lage können ebenfalls, wie bereits oben beschrieben, Materialien mit den genannten Materialparametern verwendet werden.

Die Erfindung stellt auch ein Materialverbund erhältlich durch die zuvor beschriebenen Verfahren bereit.

Die Erfindung stellt weiterhin ein Verfahren zum Herstellen eines Staubsaugerfilterbeutels bereits, umfassend ein Herstellen eines Materialverbunds gemäß einem der zuvor beschriebenen Verfahren und ein Konfektionieren des Materialverbunds zu einem Staubsaugerfilterbeutel.

Vor dem Konfektionieren kann noch ein Bereitstellen wenigstens einer Filterlage erfolgen. Dann kann noch ein Schritt eines Verbindens der wenigstens einen Filterlage mit dem Materialverbund vor dem Konfektionieren erfolgen.

Die Erfindung stellt außerdem einen Staubsaugerfilterbeutel erhältlich durch die zuvor beschriebenen Verfahren bereit.

Nachfolgend wird die Erfindung anhand von Beispielen und der Figuren näher beschrieben. Dabei zeigt
Fig. 1 schematisch den Aufbau eines ersten beispielhaften Materialverbunds;
Fig. 2 schematisch einen zweiten Aufbau eines beispielhaften Materialverbunds;
Fig. 3 schematisch den Aufbau eines dritten beispielhaften Materialverbunds.

Für die Bestimmung der verschiedenen Parameter werden die folgenden Verfahren verwendet. Die Luftdurchlässigkeit wird gemäß DIN EN ISO 9237: 1995-12 bestimmt. Eingesetzt wurde das Luftdurchlässigkeits-Prüfgerät FX3300 der Texttest AG. Es wurde insbesondere mit einem Differenzdruck von 200 Pa und einer Prüffläche von 25 cm² gearbeitet.

Das Flächengewicht wird gemäß DIN EN 29073-1: 1992-08 bestimmt. Für die Bestimmung der Dicke wird das Verfahren gemäß Norm DIN EN ISO 9073-2: 1997-02 eingesetzt, wobei für ein extrudiertes Netz das Verfahren A verwendet wird.

Die mittlere Lochquerschnittsfläche wird optisch, beispielsweise mittels eines Messmikroskop oder Bildanalyse, bestimmt, wobei über wenigstens 100 Löcher bzw. Poren gemittelt wird und für jedes Loch die geringste Querschnittsfläche parallel zur Grundfläche herangezogen wird.

Die Maschenweite wird gemäß DIN ISO 9044 als Abstand zwischen zwei benachbarten Stegen oder Fäden in der Projektionsebenen und in der Mitte der Masche bestimmt.

Die Bestimmung der Höchstzugkraft und Höchstzugkraftdehnung wurde gemäß DIN EN 29073-3: 1992-08 durchgeführt. Zur Feinheitsbestimmung wurde DIN EN ISO 1973: 1995-12 herangezogen.

Sofern nichts anderes gesagt, werden die oben genannten Verfahren auch zur Bestimmung der entsprechenden Parameter von extrudierten Netzen verwendet.

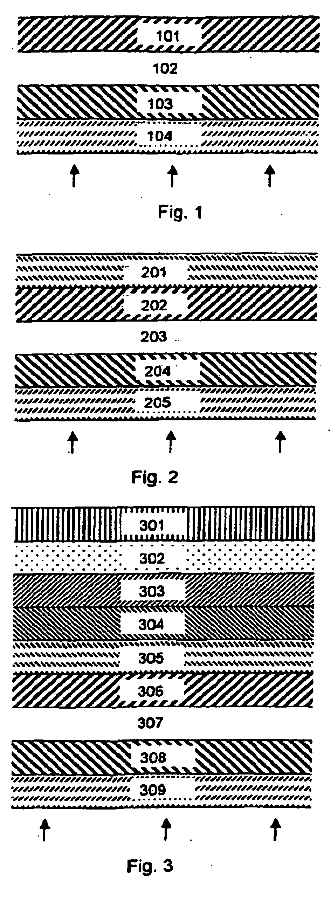

Fig. 1 zeigt schematisch den Aufbau eines beispielhaften Materialverbunds. Eine erste Lage 101 ist in Form eines extrudierten oder gewebten Netzes vorgesehen. Ein derartiges extrudiertes Netz kann beispielsweise gemäß der DE 35 08 941 hergestellt werden.

Alternativ können beispielsweise von der Firma Conwed die Netze R03650, RO5340 oder Thermanet RO3434 verwendet werden. So weist beispielsweise das Netz RO3650 eine Luftdurchlässigkeit von größer als 15000 l/(m²s), ein Flächengewicht von 10,54 g/m², eine Maschenweite von 4,2 x 4,2 mm und eine Dicke von 0,3 mm auf.

Ein Beispiel für ein geeignetes gewebtes Netz ist unter der Nummer 3945/85 von Chavanoz Industrie erhältlich. Die Luftdurchlässigkeit liegt bei über 15000 l/(m² s), das Flächengewicht beträgt 17 g/m² und die Höchstzugkraft liegt bei 50 N.

Mit dieser ersten Lage wird eine erste Faserlage 102 verbunden. Diese Faserlage kann insbesondere Stapelfasern oder Endlosfasern umfassen oder aus diesen bestehen. Mögliche Fasern sind beispielsweise Monokomponentenfasem aus Polypropylen oder Polyester oder auch Bikomponentenfasem. Weiterhin kann die Faserlage 102 auch Schmelzfasem zum nachfolgenden Verbinden mit der ersten Lage umfassen.

Bei der Herstellung eines Materialverbunds gemäß Fig. 1 kann beispielsweise zunächst die erste Lage 101 abgelegt werden, wonach ein Ablegen der ersten Faserlage 102 auf der ersten Lage 101 erfolgt. Alternativ kann auch zuerst die erste Faserlage 102 abgelegt werden, auf der dann die erste Lage 101 abgelegt wird.

Ein Verbinden der ersten Lage 101 und der ersten Faserlage 102 kann auf verschiedene Arten erfolgen, wobei dieses Verbinden grundsätzlich unabhängig von den übrigen Lagen des Materialverbunds sein kann. Beispielsweise können die beiden Lagen thermisch, insbesondere mittels Kalandrierens, verbunden werden. Hierfür weist zumindest eine der beiden Lagen eine thermoplastische Komponente auf. Beispielsweise kann die erste Faserlage thermoplastische Fasern, beispielsweise in Form von Bikomponentenfasern und/oder in Form von beigefügten Schmelzfasern, aufweisen. Alternativ oder zusätzlich kann die erste Lage ein thermoplastisches Polymer umfassen; so kann beispielsweise die erste Lage in Form eines extrudierten Bikomponentennetzes vorgesehen sein. Das Kalandrieren kann insbesondere flächig (mit glatten Walzen oder einem Bandkalander) durchgeführt werden. Durch das Kalandrieren werden zumindest einige der Fasern der ersten Faserlage mit der ersten Lage verbunden.

Beispielsweise kann zuerst die erste Lage 101 (ein Netz) abgelegt werden. Auf diese erste Lage wird dann eine erste Faserlage 102 in Form einer Vliesstofflage aus Stapelfasern abgelegt. Anschließend werden die erste Lage und die erste Faserlage durch einen Bandkalander geführt, wodurch die Fasern der ersten Faserlage untereinander und mit,der ersten Lage thermisch verbunden werden. Dabei ragen insbesondere Fasern der ersten Faserlage in die Poren oder Löcher der ersten Lage.

Gemäß einer Variante kann beispielsweise zuerst die erste Faserlage 102 abgelegt werden und dann mit einem Klebstoff, beispielsweise Hotmelt, besprüht werden. Danach wird die erste Lage 101 abgelegt und durch einen Bandkalander, so dass eine Klebeverbindung erfolgt.

Als zweite Faserlage 103 kann beispielsweise eine Meltblowniage folgen. Die dritte Faserlage 103 ist mit der ersten Faserlage 102 an der der ersten Lage 101 abgewandten Seite verbunden. Diese Verbindung kann beispielsweise thermisch (insbesondere durch einen Bandkalander) erfolgen.

Eine weitere Faserlage 104 kann zusätzlich vorgesehen sein. Diese Faserlage kann beispielsweise eine Spunbondlage sein. Auch die Faserlage 104 kann beispielsweise thermisch oder durch Ultraschallschweißen mit den übrigen Lagen verbunden sein.

Wenn aus dem Materialverbund gemäß Fig. 1 ein Staubsaugerfilterbeutel konfektioniert wird, so kann die erste Lage 101 als äußerste Lage des Staubsaugerfilterbeutels angeordnet sei.

Damit ist die erste Lage 101 bezüglich des Luftstroms im Betrieb am weitesten stromabwärts angeordnet, was durch die Pfeile in Fig. 1 illustriert wird. Alternativ können die Lagen 101 und 102 jedoch auch vertauscht sein, so dass dann die erste Faserlage 102 im konfektionierten Staubsaugerbeutel die innerste Lage bilden würde, gefolgt von der ersten Lage 101. Dies hat insbesondere den Vorteil, dass ein Verhaken des Netzes 101 im Staubsaugergehäuse vermieden würde.

Für die Beuteiwand eines Staubsaugerfilterbeutels werden dem in Figur 1 gezeigten Materialverbund vorzugsweise noch weitere Materiallagen hinzugefügt, wie sie beispielhaft in Figuren 2 und 3 gezeigt sind.

Fig. 2 illustriert schematisch ein weiteres Beispiel eines Materialverbundaufbaus. In dem gezeigten Beispiel ist die erste Lage 202, bei der es sich beispielsweise um ein extrudiertes Netz handeln kann, auf beiden Seiten mit einer zweiten Faserige 201 und einer dritten Faserlage 203 verbunden. Bei der Herstellung kann beispielsweise zunächst die eine der beiden Faserlagen, dann die erste Lage 202 und schließlich die andere Faserlage abgelegt werden. Bei den Faserlagen kann es sich insbesondere um kardierte Vliesstoffe oder Extrusionsvliesstoffe handeln, die jedoch unterschiedliche Fasern bzw. unterschiedliche Parameter (wie Flächengewicht und Dicke) aufweisen können. Alternativ. können die beiden Faserlagen jedoch auch gleich sein. Nach dem Ablegen dieser drei Lagen kann dann beispielsweise eine Verbindung mittels eines Bandkalanders erfolgen, so dass beide Faserlagen mit der dazwischen liegenden ersten Lage verbunden werden.

Stromaufwärts folgt eine kardierte Vlieslage 204 und eine Lage 205, die durch ein extrudiertes Netz oder eine gelochte Folie gebildet wird. Die Meitblowniage kann analog zu dem Beispiel in Fig. 1 ausgebildet sein. Die innerste Lage 205 wird in dem gezeigten Beispiel durch ein extrudiertes Netz oder eine gelochte Folie gebildet und erfüllt in erster Linie eine Stabilisierungsfunktion. Die Vlieslage 204 und die Lage 205 können beispielsweise mit einem Gravurkalander verbunden sein. Eine Verbindung mit dem Materialverbund aus den Lagen 201, 202 und 203 kann thermisch unter Zuhilfenahme von Hotmelt erfolgen.

Die in Figur 2 und 3 gezeigten Materialverbunde sind geeignet, die Beuteiwand eines Staubsaugerfilterbeutels zu bilden.

In Fig. 3 ist schematisch ein weiteres Ausführungsbeispiel eines Materialverbunds illustriert. Bei dem gezeigten Aufbau sind stromabwärts beide Seiten eines extrudierten Netzes 302 mit einer Vliesstofflage 301 und 303 versehen. In einem Staubsaugerfilterbeutel wird die Vliesstofflage 301 die Außenlage bilden. Die Vliesstofflagen 301 und 303 werden mittels eines Bandkalanders mit dem extrudierten Netz 302 verbunden. Dieser Materialverbund kann wie unten beschrieben erhalten werden.

Weiter stromaufwärts befinden sich zwei Meitblowniagen 304 und 305, gefolgt von einer Vlieslage 306 aus elektrostatisch geladenen Stapelfasern. Die Lagen 304, 305 und 306 werden durch Kalandrieren, beispielsweise mittels eines Ultraschalikalanders, miteinander und den ersten drei Lagen verbunden. Stromaufwärts angeordnet folgt ein Laminat aus einem extrudierten Netz 308, das auf beiden Seiten eine kardierte Stapeifaserlage 307 bzw. 309 aufweist.

Ein Materialverbund wie aus den Lagen 301, 302, und 303 in der Figur 3 beseht aus drei Lagen. Dabei sind zwei Faserlagen jeweils an einer Seite einer ersten Lage in Form eines Netzes angeordnet, so dass das Netz zwischen den beiden Faserigen angeordnet ist. Bei den Faserlagen handelt es sich um Vliesstofflagen, beispielsweise aus Stapeifasem. Bei der Herstellung wird das Netz zwischen den beiden Vliesstofflagen abgelegt. Für eine thermische Verbindung umfassen die Faserlagen und/oder das Netz eine oder mehrere thermoplastische Komponenten. So kann beispielsweise das Netz aus einem Monokomponentenmaterial bestehen, die beiden Faserlagen jedoch Bikomponentenfasern enthalten. Statt der Bikomponentenfasern können die Faserlagen auch Schmelzfasem umfassen. Alternativ oder zusätzlich besteht das Netz aus Bikomponentenmaterial. Gesäß einer weiteren Variante kann ein Klebemittel, wie beispielsweise ein Hotmelt, vorgesehen sein.

Dann werden die drei Lagen durch einen Bandkalander geführt, so dass durch die thermoplastischen Komponenten eine Klebeverbindung entsteht Dabei werden Fasern innerhalb der jeweiligen Faserlagen, Fasern der beiden Faserlagen mit dem Netz und Fasern einer Faserlage mit Fasern der anderen Faserlage verbunden. Letzteres erfolgt durch die Maschen oder Poren des Netzes hindurch; die Fasern der Faserlagen ragen also in die Maschen des Netzes und werden darin miteinander verbunden. Auf diese Weise wird ein sehr stabiler Verbund erreicht, dessen Lagen gegeneinander nicht verschiebbar sind und bei dem das Netz durch die Fasern der beiden Faserlagen vollständig umschlossen ist.

Es versteht sich, dass die zuvor beispielhaft aufgeführten Lagen (beispielsweise aus einem Netz, einem Vlies oder einem Vliesstoff) auch in anderer Art und Weise angeordnet und gegebenenfalls miteinander verbunden werden können. Weiterhin versteht es sich, dass in den Figuren weder die gezeigten Lagen in einer realistischen Dimensionierung noch die mikroskopische Anordnung der Fasern der verschiedenen Lagen wiedergegeben ist.

## Patentansprüche

1. Staubsaugerfilterbeutel mit einem Materialverbund umfassend:
eine erste Lage aus einem Netz mit einer Luftdurchlässigkeit von wenigstens 10000 l/(m² s),
eine erste Faserlage aus Chemiefasern und/oder pflanzlichen Fasern, die mit einer Seite der ersten Lage verbunden ist,
wobei die erste Lage ein Flächengewicht von 5 bis 30 g/m² und eine Dicke von 0,1 bis 1,5 mm aufweist,
wobei die erste Lage ein Netz mit einer Maschenweite von 2 mm bis 30 mm ist,
wobei der Materialverbund eine zweite Faserlage aus Chemiefasern und/oder pflanzlichen Fasern, die mit der ersten Lage an der der ersten Faserlage abgewandten Seite verbunden ist, umfasst,
wobei die erste und die zweite Faserlage jeweils eine trockengelegte Vliesstofflage oder eine Extrusionsvliesstofflage sind,
wobei die erste Lage eine Höchstzugkraftdehnung in Maschinenrichtung und/oder in Querrichtung von 10 bis 70 % aufweist.

2. Staubsaugerfilterbeutel nach Anspruch 1, wobei das Netz ein extrudiertes Netz oder ein gewebtes Netz ist.

3. Staubsaugerfilterbeutel nach Anspruch 1 oder 2, wobei die erste Lage ein Flächengewicht von 7 bis 20 g/m² und/oder eine Dicke von 0,2 bis 0,6 mm aufweist.

4. Staubsaugerfilterbeutel nach einem der vorangegangenen Ansprüche, wobei die erste Lage eine mittlere Lochquerschnittsfläche von 2 bis 900 mm², insbesondere 5 bis 50 mm², und/oder eine Luftdurchlässigkeit von wenigstens 11000 l/(m² s), insbesondere von wenigstens 13000 l/(m² s), aufweist.

5. Staubsaugerfilterbeutel nach einem der vorangegangenen Ansprüche, wobei die erste Lage eine Höchstzugkraft in Maschinenrichtung und/oder in Querrichtung von 30 bis 200 N, insbesondere von 40 bis 110 N, und/oder eine Höchstzugkraftdehnung in Maschinenrichtung und/oder in Querrichtung von 10 bis 30 % aufweist.

6. Staubsaugerfilterbeutel nach einem der vorangegangenen Ansprüche, wobei die erste Faserlage Fasern mit einer Feinheit von höchstens 5 dtex, insbesondere von höchstens 3 dtex, aufweist.

7. Staubsaugerfilterbeutel nach einem der vorangegangenen Ansprüche, wobei die erste und/oder die zweite Faserlage thermisch, insbesondere mittels Kalandrierens, und/oder mittels eines Klebemittels mit der ersten Lage verbunden ist.

8. Staubsaugerfilterbeutel nach einem der vorangegangenen Ansprüche, wobei die erste und/oder die zweite Faserlage in Form einer Vliesstofflage aus Stapelfasern ausgebildet ist.

9. Staubsaugerfilterbeutel nach einem der vorangegangenen Ansprüche, wobei die zweite Faserlage ein Flächengewicht von 5 bis 60 g/m², insbesondere von 5 bis 30 g/m² aufweist.

10. Staubsaugerfilterbeutel nach einem der vorangegangenen Ansprüche, wobei der Verbund aus erster Lage und erster Faserlage oder aus erster Lage, erster Faserlage und zweiter Faserlage eine Luftdurchlässigkeit von 2000 bis 12000 l/(m² s), insbesondere 4000 bis 10000 l/(m² s), aufweist.

11. Staubsaugerfilterbeutel nach einem der vorangegangenen Ansprüche, wobei die erste Lage, die erste Faserlage oder die zweite Faserlage die äußerste Lage der Beutelwand bilden.

12. Verfahren zum Herstellen eines Materialverbunds für einen Staubsaugerfilterbeutel mit den Schritten:
Bereitstellen einer ersten Lage aus einem Netz mit einer Luftdurchlässigkeit von wenigstens 10000 l/(m² s),
Bereitstellen einer ersten Faserlage aus Chemiefasern und/oder pflanzlichen Fasern auf einer Seite der ersten Lage,
Verbinden der ersten Lage mit der ersten Faserlage,
wobei die erste Lage ein Flächengewicht von 5 bis 30 g/m² und eine Dicke von 0,1 bis 1,5 mm aufweist,
wobei die erste Lage ein Netz mit einer Maschenweite von 2 mm bis 30 mm ist,
wobei die erste Faserlage in Form einer Vlieslage oder einer Vliesstofflage ausgebildet ist,
wobei die erste und die zweite Faserlage jeweils eine trockengelegte Vliesstofflage oder eine Extrusionsvliesstofflage sind,
weiterhin umfassend ein Bereitstellen einer zweite Faserlage, und wobei der Schritt des Verbindens ein Verbinden der zweiten Faserlage mit der ersten Lage an der der ersten Faserlage abgewandten Seite umfasst,
wobei die erste Lage eine Höchstzugkraftdehnung in Maschinenrichtung und/oder in Querrichtung von 10 bis 70 % aufweist.

13. Verfahren nach Anspruch 12, wobei der Schritt des Verbindens thermisch, insbesondere mittels eines Bandkalanders, erfolgt.

14. Verfahren nach Anspruch 12 oder 13, wobei die Schritte des Bereitstellens durch ein Ablegen der ersten Lage auf der ersten Faserlage oder durch ein Ablegen der ersten Faserlage auf der ersten Lage erfolgt.

15. Verfahren nach einem der Ansprüche 12 - 14, wobei das Netz ein extrudiertes Netz oder ein gewebtes Netz ist.

16. Verfahren nach einem der Ansprüche 12 - 15, wobei die erste Lage mit einem Flächengewicht von 7 bis 20 g/m² und/oder einer Dicke von 0,2 bis 0,6 mm bereitgestellt wird.

17. Verfahren nach einem der Ansprüche 12 - 16, wobei die erste Lage mit einer mittleren Lochquerschnittsfläche von 2 bis 900 mm², insbesondere 5 bis 50 mm², und/oder einer Luftdurchlässigkeit von wenigstens 11000 l/(m² s), insbesondere von wenigstens 13000 l/(m² s), bereitgestellt wird.

18. Verfahren nach einem der Ansprüche 12 - 17, wobei die erste Lage eine Höchstzugkraft in Maschinenrichtung und/oder in Querrichtung von 30 bis 200 N, insbesondere von 40 bis 110 N, und/oder eine Höchstzugkraftdehnung in Maschinenrichtung und/oder in Querrichtung von 10 bis 30 % aufweist.

19. Verfahren nach einem der Ansprüche 12 - 18, wobei die erste Faserlage Fasern mit einer Feinheit von höchstens 5 dtex, insbesondere von höchstens 3 dtex, aufweist.

20. Verfahren nach einem der Ansprüche 12 - 19, wobei der Schritt des Verbinden thermisch, insbesondere mittels Kalandrierens, und/oder mittels eines Klebemittels erfolgt.

21. Staubsaugerfilterbeutel umfassend eine Materiallage erhältlich durch ein Verfahren nach einem der Ansprüche 12 - 20.

## Claims

1. A vacuum cleaner filter bag having a composite material comprising:
a first layer consisting of a netting with an air permeability of at least 10,000 l/(m² s),
a first fibre layer consisting of man-made fibres and/or vegetable fibres and connected to one side of the first layer
wherein the first layer has a mass per unit area of 5 to 30 g/m² and a thickness of 0.1 to 1.5 mm,
wherein the first layer is a netting having a mesh opening of 2 mm to 30 mm,
wherein the composite material comprises a second fibre layer made of man-made fibres and/or vegetable fibres, said second fibre layer being connected to the first layer on the side facing away from the first fibre layer,
wherein the first and the second fibre layer are each a dry-laid non-woven layer or an extruded non-woven layer.
wherein the first layer has a tensile strength elongation in the machine direction and/or in the cross direction of 10 to 70%.

2. A vacuum cleaner filter bag according to claim 1, wherein the netting is an extruded netting or a woven netting.

3. A vacuum cleaner filter bag according to claim 1 or 2, wherein the first layer has a mass per unit area of 7 to 20 g/m², and/or a thickness of 0.2 to 0.6 mm.

4. A vacuum cleaner filter bag according to one of the preceding claims, wherein the first layer has an average hole cross-sectional area of 2 to 900 mm², in particular of 5 to 50 mm², and/or an air permeability of at least 11,000 l/(m² s), in particular of at least 13,000 l/(m² s).

5. A vacuum cleaner filter bag according to one of the preceding claims, wherein the first layer has a tensile strength in the machine direction and/or in the cross direction of 30 to 200 N, in particular of 40 to 110 N, and/or a tensile strength elongation in the machine direction and/or in the cross direction of 10 to 30%.

6. A vacuum cleaner filter bag according to one of the preceding claims, wherein the first fibre layer comprises fibres having a maximum fineness of 5 dtex, in particular of 3 dtex.

7. A vacuum cleaner filter bag according to one of the preceding claims, wherein the first and/or the second fibre layer is/are thermally bonded to the first layer, in particular by means of calendering, and/or by means of an adhesive.

8. A vacuum cleaner filter bag according to one of the preceding claims, wherein the first and/or the second fibre layer is/are implemented in the form of a non-woven layer consisting of staple fibres.

9. A vacuum cleaner filter bag according to one of the preceding claims, wherein the second fibre layer have/has a mass per unit area of 5 to 60 g/m², in particular of 5 to 30 g/m².

10. A vacuum cleaner filter bag according to one of the preceding claims, wherein the composite consisting of the first layer and the first fibre layer, or of the first layer, the first fibre layer and the second fibre layer, has an air permeability of 2,000 to 12,000 l/(m² s), in particular of 4,000 to 10,000 l/(m² s).

11. A vacuum cleaner filter bag according to one of the preceding claims, wherein the first layer, the first fibre layer or the second fibre layer define the outermost layer of the bag wall.

12. A method of making a composite material for a vacuum cleaner filter bag, comprising the following steps:
providing a first layer consisting of a netting with an air permeability of at least 10,000 l/(m² s),
providing, on one side of the first layer, a first fibre layer consisting of man-made fibres and/or vegetable fibres,
connecting said first layer to said first fibre layer,
wherein the first layer has a mass per unit area of 5 to 30 g/m² and a thickness of 0.1 to 1.5 mm,
wherein the first layer is a netting having a mesh opening of 2 mm to 30 mm,
wherein the first fibre layer is implemented in form of a web layer or a non-woven layer,
wherein the first and the second fibre layer are each a dry-laid non-woven layer or an extruded non-woven layer,
further comprising a step of providing a second fibre layer made of man-made fibres and/or vegetable fibres, wherein the connecting step comprises connecting said second fibre layer to the first layer on the side facing away from the first fibre layer,
wherein the first layer has a tensile strength elongation in the machine direction and/or in the cross direction of 10 to 70%.

13. A method according to claim 12, wherein the connecting step is executed thermally, in particular by means of a ribbon calender.

14. A method according to claim 12 or 13, wherein the steps of providing are executed by depositing the first layer on the first fibre layer, or by depositing the first fibre layer on the first layer.

15. A method according to one of the claims 12 to 14, wherein the netting is an extruded netting or a woven netting.

16. A method according to one of the claims 12 to 15, wherein the first layer is provided as a layer having a mass per unit area of 7 to 20 g/m², and/or a thickness of 0.2 to 0.6 mm.

17. A method according to one of the claims 12 to 16, wherein the first layer is provided as a layer having an average hole cross-sectional area of 2 to 900 mm², in particular of 5 to 50 mm², and/or an air permeability of at least 11,000 l/(m² s), in particular of at least 13,000 l/(m² s).

18. A method according to one of the claims 12 to 17, wherein the first layer has a tensile strength in the machine direction and/or in the cross direction of 30 to 200 N, in particular of 40 to 110 N, and/or a tensile strength elongation in the machine direction and/or in the cross direction of 10 to 30%.

19. A method according to one of the claims 12 to 18, wherein the first fibre layer comprises fibres having a maximum fineness of 5 dtex, in particular of 3 dtex.

20. A method according to one of the claims 12 to 19, wherein the connecting step is executed thermally, in particular by means of calendering, and/or by means of an adhesive.

21. A vacuum cleaner filter bag comprising a material layer that can be obtained by means of a method according to one of the claims

## Revendications

1. Sac filtrant à poussière pour aspirateur composé d'un composite de matériaux comprenant :
une première couche constituée d'un filet possédant une perméabilité à l'air d'au moins 10000 l/(m²s),
une première couche fibreuse constituée par des fibres chimiques et/ou par des fibres végétales, qui est reliée à un côté de la première couche,
sac filtrant
dans lequel la première couche présente une masse surfacique de 5 à 30 g/m² et une épaisseur allant de 0,1 à 1,5 mm,
dans lequel la première couche est un filet possédant une ouverture de maille de 2 mm à 30 mm,
dans lequel le composite de matériaux comprend une deuxième couche fibreuse constituée par des fibres chimiques et/ou par des fibres végétales, qui est reliée à la première couche du côté qui se détourne de la première couche fibreuse,
dans lequel la première et la deuxième couche fibreuse sont chacune respectivement une couche de non-tissé déposée par voie sèche ou une couche de non-tissé obtenue par extrusion,
dans lequel la première couche présente un allongement maximal sous traction dans le sens machine et/ou dans la direction transversale de 10 à 70%.

2. Sac filtrant à poussière pour aspirateur selon la revendication 1, dans lequel le filet est un filet extrudé ou un filet tissé.

3. Sac filtrant à poussière pour aspirateur selon la revendication 1 ou la revendication 2, dans lequel la première couche présente une masse surfacique de 7 à 20 g/m² et/ou une épaisseur de 0,2 à 0,6 mm.

4. Sac filtrant à poussière pour aspirateur selon l'une des revendications précédentes, dans lequel la première couche présente une aire de section moyenne de trou de 2 à 900 mm², en particulier de 5 à 50 mm², et/ou une perméabilité à l'air d'au moins 11000 l/(m²s), en particulier d'au moins 13000 l/(m²s).

5. Sac filtrant à poussière pour aspirateur selon l'une des revendications précédentes, dans lequel la première couche présente une résistance maximale à la traction dans le sens machine et/ou dans la direction transversale de 30 à 200 N, en particulier de 40 à 110 N, et/ou un allongement maximal sous traction dans le sens machine et/ou dans la direction transversale de 10 à 30%.

6. Sac filtrant à poussière pour aspirateur selon l'une des revendications précédentes, dans lequel la première couche fibreuse présente des fibres possédant une finesse maximale de 5 dtex, en particulier une finesse maximale de 3 dtex.

7. Sac filtrant à poussière pour aspirateur selon l'une des revendications précédentes, dans lequel la première et/ou la deuxième couche fibreuse sont reliées à la première couche par voie thermique, en particulier par calandrage et/ou au moyen d'un adhésif.

8. Sac filtrant à poussière pour aspirateur selon l'une des revendications précédentes, dans lequel la première et/ou la deuxième couche fibreuse sont réalisées sous la forme d'une couche de non-tissé constituée par des fibres coupées.

9. Sac filtrant à poussière pour aspirateur selon l'une des revendications précédentes, dans lequel la deuxième couche fibreuse présente une masse surfacique de 5 à 60 g/m², en particulier de 5 à 30 g/m².

10. Sac filtrant à poussière pour aspirateur selon l'une des revendications précédentes, dans lequel le composite constitué par une première couche et une première couche fibreuse ou bien par une première couche, une première couche fibreuse et une deuxième couche fibreuse, présente une perméabilité à l'air de 2000 à 12000 l/(m²s), en particulier de 4000 à 10000 l/(m²s).

11. Sac filtrant à poussière pour aspirateur selon l'une des revendications précédentes, dans lequel la première couche, la première couche fibreuse ou bien la deuxième couche fibreuse forme la couche la plus externe de la paroi du sac.

12. Procédé pour la fabrication d'un composite de matériaux destiné à un sac filtrant à poussière pour aspirateur, comprenant les étapes consistant à :
préparer une première couche constituée d'un filet possédant une perméabilité à l'air d'au moins 10000 l/(m²s),
préparer une première couche fibreuse constituée par des fibres chimiques et/ou par des fibres végétales, sur un côté de la première couche,
relier la première couche à la première couche fibreuse, procédé
d'après lequel la première couche présente une masse surfacique de 5 à 30 g/m² et une épaisseur de 0,1 à 1,5 mm,
d'après lequel la première couche est un filet possédant une ouverture de maille de 2 mm à 30 mm,
d'après lequel la première couche fibreuse est réalisée sous la forme d'une couche de feutre non tissé ou d'une couche de non-tissé,
d'après lequel la première et la deuxième couche fibreuse sont chacune respectivement une couche de non-tissé déposée par voie sèche ou une couche de non-tissé obtenue par extrusion,
le procédé comprenant par ailleurs une étape consistant à préparer une deuxième couche fibreuse, et l'étape consistant à relier les couches englobant la liaison de la deuxième couche fibreuse à la première couche du côté qui se détourne de la première couche fibreuse,
procédé
d'après lequel la première couche présente un allongement maximal sous traction dans le sens machine et/ou dans la direction transversale de 10 à 70%.

13. Procédé selon la revendication 12, d'après lequel l'étape de la liaison a lieu par voie thermique, en particulier au moyen d'une calandre à ruban.

14. Procédé selon la revendication 12 ou la revendication 13, d'après lequel les étapes de préparation ont lieu en déposant la première couche sur la première couche fibreuse ou bien en déposant la première couche fibreuse sur la première couche.

15. Procédé selon l'une des revendications 12 à 14, d'après lequel le filet est un filet extrudé ou un filet tissé.

16. Procédé selon l'une des revendications 12 à 15, d'après lequel on prépare la première couche avec une masse surfacique de 7 à 20 g/m² et/ou une épaisseur de 0,2 à 0,6 mm.

17. Procédé selon l'une des revendications 12 à 16, d'après lequel on prépare la première couche avec une aire de section moyenne de trou de 2 à 900 mm², en particulier de 5 à 50 mm², et/ou une perméabilité à l'air d'au moins 11000 l/(m²s), en particulier d'au moins 13000 l/(m²s).

18. Procédé selon l'une des revendications 12 à 17, d'après lequel la première couche présente une résistance maximale à la traction dans le sens machine et/ou dans la direction transversale de 30 à 200 N, en particulier de 40 à 110 N, et/ou un allongement maximal sous traction dans le sens machine et/ou dans la direction transversale de 10 à 30%.

19. Procédé selon l'une des revendications 12 à 18, d'après lequel la première couche fibreuse présente des fibres possédant une finesse maximale de 5 dtex, en particulier une finesse maximale de 3 dtex.

20. Procédé selon l'une des revendications 12 à 19, d'après lequel l'étape de la liaison s'effectue par voie thermique, en particulier au moyen d'un calandrage, et/ou au moyen d'un adhésif.

21. Sac filtrant à poussière pour aspirateur comprenant une couche de matériaux que l'on peut obtenir par un procédé selon l'une des revendications 12 à 20.
